# EUROPÄISCHE PATENTANMELDUNG

(11) **EP 2 340 897 A1**
(43) Veröffentlichungstag der Anmeldung: **06.07.2011**
(21) Anmeldenummer: 09450241.6
(22) Anmeldetag: 23.12.2009
(51) Int. Cl.: B21B 1/26, B21B 45/00, C21D 9/46, C21D 1/42, C21D 8/02

(54) **Thermomechanisches Behandlungsverfahren für Grobbleche**

(71) Anmelder: Voestalpine Grobblech GmbH, 4020 Linz (AT)
(72) Erfinder: Grill, Rainer, 8992 Altausee (AT); Egger, Rupert, 4481 Asten (AT); Stingeder, Christian, 4020 Linz (AT)
(74) Vertreter: Jell, Friedrich

(57) **Zusammenfassung**

Die Erfindung betrifft ein thermomechanisches Behandlungsverfahren für Grobbleche (1) zur Erhöhung der Zähigkeit, insbesondere Tieftemperaturzähigkeit, bei dem das Grobblech (1) erwärmt, durch Walzen teil- und endumgeformt und gegenüber einer Abkühlung bei Umgebungstemperatur beschleunigt abgekühlt wird, wobei das für ein Teilumformen auf über Ac3 Temperatur erwärmte Grobblech (1) nach seinem Endumformen beschleunigt abgekühlt wird. Um besondere Zähigkeitswerte zu erreichen wird vorgeschlagen, dass das Grobblech (1) zwischen Teil- und Endumformen beschleunigt auf unter Ar3 Temperatur abgekühlt und anschließend induktiv auf über Ac3 Temperatur erwärmt wird.

## Beschreibung

Die Erfindung bezieht sich auf ein thermomechanisches Behandlungsverfahren für Grobbleche zur Erhöhung der Zähigkeit, insbesondere Tieftemperaturzähigkeit, bei dem das Grobblech erwärmt, durch Walzen teil- und endumgeformt und gegenüber einer Abkühlung bei Umgebungstemperatur beschleunigt abgekühlt wird, wobei das für ein Teilumformen auf über Ac3 Temperatur erwärmte Grobblech nach seinem Endumformen beschleunigt abgekühlt wird.

Um bei Blechen Gefügezustände erreichen zu können, die sich durch höherwertige mechanisch technologische Eigenschaften auszeichnen, als diese von konventionellen Wärmebehandlungsverfahren bekannt sind, sind aus dem Stand der Technik thermomechanische Behandlungsverfahren bekannt, bei denen das Blech eine aufeinander abgestimmte Kombination von Umformung und Temperaturführung unterworfen wird. So ist es beispielsweise für Grobbleche bekannt, das Grobblech nach seinem Teil- und Endumformen beschleunigt aus dem Austenitgebiet abzukühlen, um damit für ein feinkörniges Gefüges zum Erreichen von erhöhten Zähigkeitswerten zu sorgen. Dies ist beispielsweise gerade bei einer Verwendung derartiger Grobbleche für Gasrohrleitungen wesentlich, weil dort eine vergleichsweise hohe Tieftemperaturzähigkeit gefordert wird. Außerdem kann die durch ein thermomechanisches Behandlungsverfahren erzielbare Kornfeinung verbessert werden, in dem dem Blechwerkstoff bestimmte Legierungselemente, beispielsweise Niob, zugesetzt werden. Es hat sich jedoch mit zunehmender Blechdicke herausgestellt, dass die an sich von dünnen Blechen bekannten thermomechanischen Behandlungsvorteile nicht mehr in gleichem Maße erreicht werden können. Grenzen in der mechanischen Umformleistung der Walzgerüste einerseits und in den zur Verfügung stehenden Umformgraden andererseits scheinen hier gemeinsam mit anderen Parametern zu einer Reduktion von erreichbaren Zähigkeitswerten bei Grobblechen zu führen, so dass für erhöhte Werte meist auf eine andere Legierungsauswahl, eine andere chemische Zusammensetzung der Stahllegierung und/oder eine nachfolgende Wärmebehandlung ausgewichen werden muss, was vergleichsweise kostenintensiv und letztenfalls zusätzlich auch zeitintensiv ist.

Außerdem ist es bei einem konventionellen Warmwalzen von Bändern bekannt (JP2005-133177), das nach dem Teilwalzen auf unter Ar3 Temperatur abgekühlte Band induktiv auf über Ac3 zu erwärmen und anschließend endzuwalzen. Damit soll eine verbesserte Walzbarkeit des Bands erreicht sowie auch die Homogenität des Gefüges des Bandwerkstoffs verbessert werden. Letzteres führt auch zu verbesserten und gleichmäßigeren Festigkeitseigenschaften des Blechwerkstoffs, was auch beim Tiefziehen der daraus gefertigten Waren von Vorteil sein kann. Eine Verbesserung der Zähigkeit des Bandwerkstoffs wird in der JP2005-133177 nicht erwähnt.

Die Erfindung hat sich daher die Aufgabe gestellt, ausgehend vom eingangs geschilderten Stand der Technik ein thermomechanisches Behandlungsverfahren für Grobbleche zu schaffen, das sich insbesondere in verbesserten Zähigkeitswerten eines damit behandelten Grobbleches auszeichnet. Außerdem soll das Verfahren schnell, einfach anwendbar und kostengünstig sein.

Die Erfindung löst die gestellte Aufgabe dadurch, dass das Grobblech zwischen Teil- und Endumformen beschleunigt auf unter Ar3 Temperatur abgekühlt und anschließend induktiv auf über Ac3 Temperatur erwärmt wird.

Wird das Grobblech zwischen Teil- und Endumformen auf unter Ar3 Temperatur beschleunigt abgekühlt und anschließend induktiv auf über Ac3 Temperatur erwärmt, so können überraschend die von bekannten thermomechanischen Behandlungsverfahren erreichbaren Zähigkeitswerte für Grobbleche vergleichsweise deutlich verbessert werden. Es hat sich nämlich herausgestellt, dass eine zwischen den Walzschritten durchgeführte beschleunigte und damit schnelle Abkühlung in Kombination mit einer induktiven und damit schnellen Erwärmung zu einer besonderen Kornfeinung des Austenits führen kann, mit dem unter Kombination der weiteren Verfahrensschritte des thermomechanischen Behandlungsverfahrens - im Sinne von Umformung und Temperaturführung - bekannte Grenzen in erreichbaren Zähigkeitswerten überwunden werden können. Damit können auch für dicke Grobbleche neue Gefügezustände erreicht werden, die sich durch höherwertige Zähigkeitseigenschaften auszeichnen können, was ansonsten nur von Blechen mit geringen Dicken bekannt ist. Insbesondere bei Grobblechen mit deren vergleichsweise hohen Blechdicken und den damit einhergehenden Herausforderungen beim Walzumformen wurde eine beträchtliche Verbesserung der Tieftemperaturzähigkeit festgestellt, wodurch sich solch behandelte Grobbleche insbesondere für Rohre bei einer Erdöl- und Erdgasleitung eignen können. Erfindungsgemäß kann sich daher eine zumindest teilweise Umkörnung des Gefüges als besonders vorteilhaft zur Verbesserung einer von einem thermomechanisches Behandlungsverfahren erzielbaren Zähigkeit bewähren, obwohl beim erfindungsgemäßen thermomechanischen Behandlungsverfahren eventuell mit verminderten Festigkeitswerten gerechnet werden kann. In diesem Zusammenhang der Umkörnung wird erwähnt, dass der Einfachheit halber unter Umkörnung wenigstens eine teilweise Umwandlung des Gefüges mit Hilfe von wenigstens zwei Phasenübergängen bzw. wenigstens eine zweimalige Phasenumwandlung, nämlich hier aus der (y Phase) heraus und wieder zurück, verstanden wird. Des Weiteren kann sich als vorteilhaft herausstellen, dass durch die beschleunigte Abkühlung ein erhöhter Temperaturgradient über die Blechdicke einstellbar ist, was ebenso zu erhöhten Zähigkeitswerten am Grobblech beitragen kann. Außerdem kann sich das erfindungsgemäße Verfahren besonders durch seine einfache Integrierbarkeit bei bestehenden thermomechanischen Behandlungsverfahren herausstellen. Durch den vergleichsweise kurzen Kühlungs- und vergleichsweise schnellen Erwärmungsschritt, kann es nämlich unter Anwendung dieser Verfahrensschritte zu einer lediglich vergleichsweise geringen Verzögerung im Behandlungsfortschritt kommen, so dass sich das erfindungsgemäße thermomechanische Behandlungsverfahren nicht nur durch verbesserte Materialeigenschaften sondern auch durch einen vergleichsweise hohen Durchsatz an Grobblechen, durch Kostengünstigkeit und durch einfache Anwendbarkeit auszeichnen kann.

Wird das Grobblech anschließend an das Teilumformen beschleunigt abgekühlt, dann kann nicht nur ein zügiges Behandlungsverfahren ermöglicht sondern auch eine verbesserte Kornfeinung geschaffen werden. So kann beispielsweise die vergleichsweise hohe Restwärme des Grobbleches nach dem Teilumformen zur verbesserten Umkörnung des Gefüges beitragen, in dem das Grobblech erhöhte Temperaturunterschiede durch das beschleunigte Abkühlen und dem induktiven Wiedererwärmen unterworfen wird. Außerdem kann das nach dem Teilumformen geschaffene Gefüge des Grobbleches nahezu unverändert der Umkörnung zugeführt werden, weil Wartezeiten zwischen Teilumformen und Abkühlen nahezu unterbleiben können, so dass damit die Zähigkeitswerte des thermomechanisch behandelten Grobbleches zusätzlich verbessert werden können.

Besondere Verhältnisse in der Schaffung von vergleichsweise hohen Zähigkeitswerten können sich ergeben, wenn das Grobblech nach dem Teilumformen beschleunigt auf unter Ar1 Temperatur abgekühlt wird. Damit kann unter anderem eine vollständige Umkörnung des Austenits durch Vermeidung von Mischphasen (y+a Phase) ermöglicht werden, was zu einer erheblicher Kornfeinung des Austenitgefüges führen kann.

Wird das Grobblech induktiv auf seine Temperatur zum Endumformen erwärmt und anschließend dem Endumformen unterworfen, so kann das Behandlungsverfahren in seinem Ablauf vereinfacht werden, weil keine weiteren Maßnahmen zur Vorbereitung des Grobbleches auf das Endwalzen mehr notwendig sind. Durch das anschließende Endumformen kann auch vorteilhaft eine eventuelle Wölbung des Grobbleches auf einfache Weise unterbunden werden, weil damit keine Wartezeiten bis zum Erreichen der für eine Endwalzung notwendigen Temperatur eingehalten werden müssen und in diesem Sinne das Grobblech unmittelbar nach dem Erwärmen weiterverarbeitet werden kann. Außerdem kann das Grobblech ohne Verzögerung nach einem Umkörnen den weiteren Schritten der thermomechanischen Behandlung unterworfen werden, was nicht nur für ein schnelles und reproduzierbares Behandlungsverfahren sorgen sondern auch ungewollte Veränderungen des Gefüges, die beispielsweise durch Wartezeiten bedingt sein können, vermeiden kann. Hinzu kommt, dass durch dieses Einstellen auch insbesondere die Kernschicht des Grobblechs auf eine vorteilhafte Temperatur gebracht werden kann. Es kann nämlich das Grobblech auf eine Temperatur zum Endumformen derart induktiv erwärmt werden, dass auch die Temperatur der Kernschicht im Nahbereich über der Ar3 Temperatur liegt, so dass durch das Endwalzen eine erhöhte Kornfeinung im Kerngefüge des Grobblechs führen kann, wodurch sich die Zähigkeit des Grobblechs erhöht.

Besondere thermomechanische Behandlungsparameter können geschaffen werden, wenn die Kernschicht des Grobblechs im Bereich 0 bis 80 Grad Celsius über Ar3 Temperatur, insbesondere 20 Grad über Ar3 Temperatur, induktiv erwärmt wird, weil es dann durch das Endwalzen zu einer besonderen Kornfeinung im Kerngefüge des Grobblechs kommen kann. Es versteht sich von selbst, dass die Kernschicht des Grobblechs im Querschnitt die mittlere Gefügeschicht des Grobblechs verstanden werden kann, an den die beiden Randschichten des Grobblechs anschließen.

Um die Kornfeinung des Austenits in eine besondere Zähigkeit überführen zu können, kann vorgesehen sein, dass das Grobblech mit einer Walzendtemperatur von größer gleich Ar3 beschleunigt gekühlt wird. Durch das beschleunigte Abkühlen ausgehend von einer Temperatur über Ar3, kann nämlich das endgewalzte feinkörnige Austenitgefüge in besonderem Maße in ein homogenes Umwandlungsgefüge übergeführt werden. Das nun durch das thermomechanische Behandlungsverfahren geschaffene Gefüge kann sich insbesondere durch seine Tieftemperaturzähigkeit auszeichnen. Insbesondere soll die Temperatur des Grobblechs beim Endumformen unterhalb der Rekristallisationstemperatur gehalten werden, damit keine Rekristallisation des verformten Austenits mehr eintreten und damit das Gefüge eventuell gestört wird.

Wird das Blech mit Hilfe einer Längsfelderwärmung induktiv erwärmt, dann kann eine homogene Erwärmung und damit gleichmäßige Kornfeinung über das Grobblechgefüge ermöglicht werden, was die Zähigkeit des Werkstoffs zusätzlich verbessern kann. Außerdem kommt hinzu, dass über eine induktive Beaufschlagung des Grobbleches mit einem Magnetfeld zumindest teilweise entlang der Längserstreckung des Grobblechs auch eine verhältnismäßig gleichmäßige Induktion wenigstens in Gefügeteilen des Grobblechs ermöglicht werden kann, was zu verbesserten thermomechanischen Behandlungsparametern führen kann.

Wird das Grobblech einem reversierenden Teil- und/oder Endwalzen unterworfen, dann können unter anderem auch erhöhte Blechdicken thermomechanisch behandelt werden. Außerdem kann der Ablauf des thermomechanischen Behandlungsverfahrens damit verbessert gesteuert werden.

Weist ein Grobblech eine geringe Korngröße, hergestellt durch ein thermomechanisches Behandlungsverfahren bei dem unter anderem eine Umkörnung zwischen zwei Walzschritten durchgeführt wird, auf, dann kann ein Gefüge ermöglicht werden, dass beim Grobblech zu einer erhöhten Zähigkeit führen kann.

Verbesserte Zähigkeitswerte können ermöglicht werden, wenn für das thermomechanische Behandlungsverfahren ein Grobblech mit einer Stahllegierung aufweisend 0,02 bis 0,1 Massen% (C) Kohlenstoff, 1,0 bis 2,0 Massen% (Mn) Mangan, 0 bis 0,1 Massen% (V) Vanadium und (Ti) Titan und (Nb) Niob, 0 bis 1,0 Massen% (Cr) Chrom und (Mo) Molybdän, 0 bis 1,0 Massen% (Cu) Kupfer und (Ni) Nickel, 0 bis 0,003 Massen% (B) Bor, einen CEIIW Wert von 0,2 bis 0,7 Massen%, sowie Verunreinigungen und (Fe) Eisen verwendet wird. Bekanntermaßen kann sich das Kohlenstoffäquivalent des Internationalen Instituts of Welding (IIW) aus folgender Formel berechnet werden: CEIIW=C+Mn/6+(Cr+Mo+V)/5+(Cu+Ni)/15

Im Folgenden wird beispielsweise das erfindungsgemäße thermomechanische Behandlungsverfahren anhand eines Ausführungsbeispiels beispielsweise beschrieben.

Vor dem Teilwalzen wird das Vormaterial mit Hilfe einer Einrichtung zur Brammenerwärmung auf über Ac3 Temperatur erwärmt, vorzugsweise auf 1000 bis 1200 Grad Celsius, was nicht dargestellt worden ist. Anschließend wird das Grobblech 1 einem Walzen unterworfen, wobei dieses Walzen aus einem oder mehreren Teilwalzen mit eventuell mehreren Teilwalzsschritten (Stichen) und einem Endwalzen mit eventuell mehreren Endwalzsschritten (Stichen) bestehen kann, was beispielsweise durch ein reversierendes Walzen ermöglicht werden kann. Solch ein Verfahren kann beispielsweise ein "drei Phasenwalzen" darstellen mit zwei Teilwalzen, nämlich Vorwalzen und Zwischenwalzen, und abschließenden Endwalzen. Der Einfachheit halber wird lediglich auf ein Teilwalzen eingegangen, zumal eine Umkörnung zwischen dem Teil- und Endwalzen auch einschließt, dass diese Umkörnung zwischen dem Teilwalzen erfolgen kann, auf das dann ein Endwalzen erfolgen kann. Als Teilwalzen wird sohin eine Umformung des Grobblechs 1 verstanden, mit der noch nicht die Endform des Grobblechs 1 erreicht wird.

Das erwärmte Grobblech 1 wird in weiterer Folge einem Walzgerüst 2 zum Teilwalzen zugeführt. Das teilumgeformte Grobblech 1 wird im Zuge des thermomechanischen Behandlungsverfahrens auch einem Endumformen unterworfen, wobei hierfür das ebenso das Walzgerüst 2 verwendet werden kann. Nach dem Endumformen mit einer Walzendtemperatur über Ar3 wird das Grobblech 1 beschleunigt abgekühlt, um damit bekanntermaßen für erhöhte Zähigkeitswerte sorgen zu können. Eine derartige gegenüber einer Abkühlung bei Umgebungstemperatur beschleunigte Abkühlung kann beispielsweise durch eine Kühlstrecke 3 mit Wasser 4 zur Kühlung des fertiggewalzten Grobblechs 1 erfolgen. Vorstellbar ist eine Kühlstoptemperatur, bei der die beschleunigte Abkühlung abgebrochen wird, unterhalb der Ar3 Temperatur oder zumindest 100 Grad Celsius unter der Walzendtemperatur, wobei dann die weitere Abkühlung bei Umgebungstemperatur erfolgen kann.

Im Unterschied zum Stand der Technik jedoch wird das Grobblech 1 zwischen dem Teilumformen und dem Endumformen beschleunigt aus dem Austenitbereich (y Phase) abgekühlt, wodurch ein feinkörniges Gefüge mit vergleichsweise geringem Ferritanteil ermöglicht werden kann und dann induktiv vergleichsweise schnell wieder in diesen Temperaturbereich bzw. in diese Phase erwärmt. Dadurch kommt es zumindest kurzfristig zu einer Umkörnung zumindest von Teilen des Austenitgefüges. Durch diese teilweise y-α-y Umwandlung kann eine besondere Kornfeinung ermöglicht werden. Zur beschleunigten Kühlung kann beispielsweise die bereits erwähnte Kühlstrecke 3 verwendet werden. Insbesondere hat sich eine induktive Erwärmung mit Hilfe einer Längsfelderwärmung 5 als vorteilhaft herausgestellt. Das im Wesentlichen in Längsrichtung des Grobblechs 1 ausgerichtete Magnetfeld 6 zeigte hervorragende Eigenschaften in den durch das thermomechanische Behandlungsverfahren erzielbaren Zähigkeitswerten. Nicht dargestellt ist ein reversierendes Walzen, es ist jedoch für einen Fachmann klar, dass je nach Anforderungen an das Grobblech 1 in mehreren Stichen von den jeweiligen Walzgerüsten 2 thermomechanisch bearbeitet werden kann.

Eine Kornfeinung kann insbesondere verbessert werden, wenn unter Ar1 beschleunigt abgekühlt wird, so dass das gesamte Gefüge wenigstens kurzfristig die α Phase erreicht und nach einem Rückerwärmen eine vollständige Umkörnung des gesamten Austenitgefüges eintritt.

Vorteilhaft erfolgt das induktive Erwärmen auf eine derart hohe Temperatur über Ac3, dass mit dem anschließenden Endwalzen das Grobblech 1 noch eine Walzendtemperatur über Ar3 aufweist, die vorzugsweise im Bereich von 680 bis 920 Grad Celsius liegt. Damit kann nach dem induktiven Erwärmen des Grobbleches 1 ohne Wartezeit das Endwalzen beginnen. Besonders kann damit auch die Temperatur der Kernschicht des Grobblechs eingestellt werden, um gerade bei dicken Grobblechen auch dessen vergleichsweise schwer bearbeitbaren Kern vorteilhaft thermomechanisch behandeln zu können. Temperaturen im Bereich 0 bis 80 Grad Celsius über Ar3 Temperatur, insbesondere 20 Grad über Ar3 Temperatur, haben sich hierfür bewährt.

Das erfindungsgemäße thermomechanische Behandlungsverfahren hat sich insbesondere bei einer fertiggewalzten Grobblechdicke von 25 bis 100mm und/oder für Grobblech 1 mit einer Stahllegierung, aufweisend
0,02 bis 0,1 Massen% (C) Kohlenstoff,
1,0 bis 2,0 Massen% (Mn) Mangan,
0 bis 0,1 Massen% (V) Vanadium und (Ti) Titan und (Nb) Niob,
0 bis 1,0 Massen% (Cr) Chrom und (Mo) Molybdän,
0 bis 1,0 Massen% (Cu) Kupfer und (Ni) Nickel,
0 bis 0,003 Massen% (B) Bor
CE_{llw} Wert von 0,2 bis 0,7 Massen%,
   sowie Verunreinigungen und (Fe) Eisen,
   als vorteilhaft herausgestellt. Damit konnten mechanisch-technologische Eigenschaften erreicht werden, die durch ein Warmwalzen, durch eine dem Stand der Technik entsprechenden thermomechanischen Behandlung als auch durch eine Wärmebehandlung für sich alleine nicht erreichbar sind.

Im Allgemeinen konnte durch das erfindungsgemäße Verfahren ab einer Blechdicke von 25mm festgestellt werden, dass damit eine deutliche Verringerung der Körngröße des Austenits erzielt wird und somit auch die Zähigkeit bzw. Tieftemperaturzähigkeit des daraus entstehenden Umwandlungsgefüges verbessert werden konnte. So kann die Verschiebung des Sprödbruchübergangs, hin zu tieferen Temperaturen, beispielsweise ermittelt durch einen Kerbschlagbiegeversuch oder den "Battelle Drop Weight Tear" Test (BDWTT), genützt werden, aus solch einem behandelten Grobblech 1 Gasleitungsrohre oder "Offshore" Plattformen zu fertigen, da diese Werkstoffe bei tiefen Temperaturen ausreichend zäh und schweißbar sein müssen. Die Erfindung überwindet daher die Grenzen zwischen Blechdicke und erreichbaren Zähigkeitswerten, in dem das Grobblech 1 in Richtung wenigstens einer teilweisen Umkörnung des Austenitgefüges beschleunigt temperaturbelastet wird, was sowohl durch das beschleunigte Abkühlen als auch das induktiv schnelle Erwärmen geschaffen wird.

So zeigten Versuchsergebnisse beispielsweise bei einer Blechdicke von 25mm eine Verbesserung der Sprödbruchübergangstemperatur ermittelt im BDWTT (gemäß Norm DIN EN 10274) um etwa 40 Grad Celsius, was auf Grundlage des erfindungsgemäßen thermomechanischen Behandlungsverfahren ermöglicht werden konnte. Wobei das erfindungsgemäße thermomechanische Behandlungsverfahren unter anderem für Grobbleche mit einer Mindestdehngrenze von 448 MPa mit einer Stahllegierung, aufweisend
0,06 Massen% (C) Kohlenstoff,
0,34 Massen% (Si) Silizium,
1,63 Massen% (Mn) Mangan,
0,012 Massen% (P) Phosphor,
0,001 Massen% (S) Schwefel,
0,04 Massen% (Al) Aluminium,
0,4 Massen% (Cr) Chrom,
0,2 Massen% (Mo) Molybdän,
0,035 Massen% (Nb) Niob,
0,014 Massen% (Ti) Titan,
0,0015 Massen% (B) Bor,
0,0045 Massen% (N) Stickstoff,
   sowie Verunreinigungen und (Fe) Eisen,
   als auch mit einer Mindestdehngrenze von 700 MPa mit einer Stahllegierung, aufweisend
0,03 Massen% (C) Kohlenstoff,
0,35 Massen% (Si) Silizium,
1,55 Massen% (Mn) Mangan,
0,009 Massen% (P) Phosphor,
0,001 Massen% (S) Schwefel,
0,03 Massen% (Al) Aluminium,
0,18 Massen% (Cr) Chrom,
0,04 Massen% (Nb) Niob,
0,012 Massen% (Ti) Titan,
0,0044 Massen% (N) Stickstoff,
   sowie Verunreinigungen und (Fe) Eisen, angewendet worden ist.

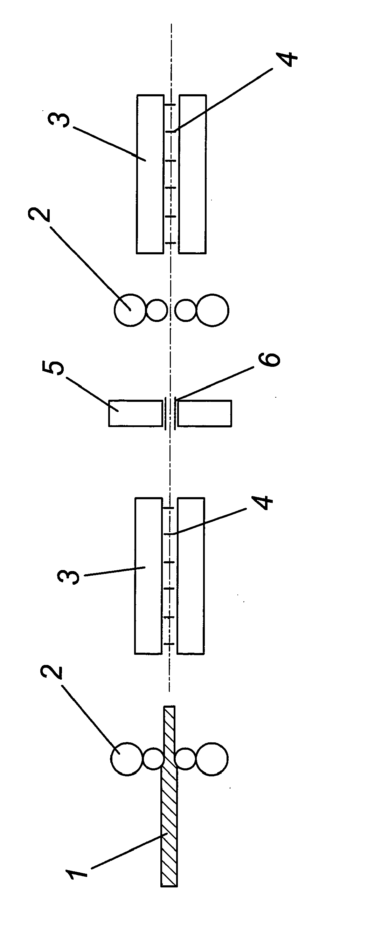

## Patentansprüche

1. Thermomechanisches Behandlungsverfahren für Grobbleche (1) zur Erhöhung der Zähigkeit, insbesondere Tieftemperaturzähigkeit, bei dem das Grobblech (1) erwärmt, durch Walzen teil- und endumgeformt und gegenüber einer Abkühlung bei Umgebungstemperatur beschleunigt abgekühlt wird, wobei das für ein Teilumformen auf über Ac3 Temperatur erwärmte Grobblech (1) nach seinem Endumformen beschleunigt abgekühlt wird, **dadurch gekennzeichnet, dass** das Grobblech (1) zwischen Teil- und Endumformen beschleunigt auf unter Ar3 Temperatur abgekühlt und anschließend induktiv auf über Ac3 Temperatur erwärmt wird.

2. Thermomechanisches Behandlungsverfahren nach Anspruch 1, **dadurch gekennzeichnet, dass** das Grobblech (1) anschließend an das Teilumformen beschleunigt abgekühlt wird.

3. Thermomechanisches Behandlungsverfahren nach Anspruch 1 oder 2, **dadurch gekennzeichnet, dass** das Grobblech (1) nach dem Teilumformen beschleunigt auf unter Ar1 Temperatur abgekühlt wird.

4. Thermomechanisches Behandlungsverfahren nach Anspruch 1, 2 oder 3, **dadurch gekennzeichnet, dass** das Grobblech (1) induktiv auf seine Temperatur zum Endumformen erwärmt und anschließend dem Endumformen unterworfen wird.

5. Thermomechanisches Behandlungsverfahren nach Anspruch 4, **dadurch gekennzeichnet, dass** die Kernschicht des Grobblechs (1) im Bereich 0 bis 80 Grad Celsius über Ar3 Temperatur, insbesondere 20 Grad über Ar3 Temperatur, induktiv erwärmt wird.

6. Thermomechanisches Behandlungsverfahren nach einem der Ansprüche 1 bis 5, **dadurch gekennzeichnet, dass** das Grobblech (1) mit einer Walzendtemperatur von größer gleich Ar3 beschleunigt gekühlt wird.

7. Thermomechanisches Behandlungsverfahren nach einem der Ansprüche 1 bis 6, **dadurch gekennzeichnet, dass** das Blech mit Hilfe einer Längsfelderwärmung (5) induktiv erwärmt wird.

8. Thermomechanisches Behandlungsverfahren nach einem der Ansprüche 1 bis 7, **dadurch gekennzeichnet, dass** das Grobblech (1) einem reversierenden Teil- und/oder Endwalzen unterworfen wird.

9. Grobblech mit einem Gefüge, aufweisend eine geringe Korngröße, hergestellt durch ein thermomechanisches Behandlungsverfahren nach einem der Ansprüche 1 bis 8.

10. Verwendung eines Grobbleches (1) mit einer Stahllegierung, aufweisend
| | |
|---|---|
| 0,02 bis 0,1 Massen% | (C) Kohlenstoff, |
| 1,0 bis 2,0 Massen% | (Mn) Mangan, |
| bis 0,1 Massen% | (V) Vanadium und (Ti) Titan und (Nb) Niob, |
| bis 1,0 Massen% | (Cr) Chrom und (Mo) Molybdän, |
| bis 1,0 Massen% | (Cu) Kupfer und (Ni) Nickel, |
| bis 0,003 Massen% | (B) Bor, |
| einen CE_{iiw} Wert von 0,2 bis 0,7 Massen%, | |
| sowie Verunreinigungen und (Fe) Eisen, | |
für ein thermomechanisches Behandlungsverfahren nach einem der Ansprüche 1 bis 8.
